# EUROPEAN PATENT APPLICATION

(11) **EP 2 336 801 A2**
(43) Date of publication of application: **22.06.2011**
(21) Application number: 10194541.8
(22) Date of filing: 10.12.2010
(51) Int. Cl.: G01S 1/68, G01S 1/70, G01S 5/00, G01C 21/00

(54) **System and method for deploying portable landmarks**

(30) Priority: 17.12.2009 US 640937
(71) Applicant: DEERE & COMPANY, Moline, Illinois 61265-8098 (US)
(72) Inventor: Anderson, Noel W, Fargo, ND 58102 (US)
(74) Representative: Holst, Sönke

(57) **Abstract**

The different illustrative embodiments provide an apparatus comprising a landmark controller, a landmark deployment system, and a number of portable landmarks. The landmark controller has a landmark position and placement process. The landmark deployment system has a number of manipulative components. The number of portable landmarks are configured to be deployed to a number of locations within a worksite.

## Description

### Field of the Invention

The present invention relates generally to systems and methods for navigation and more particularly to systems and methods for navigation using visual landmarks for localization. Still more specifically, the present disclosure relates to a method and system for deploying portable landmarks.

### Background of the Invention

The use of robotic devices to perform physical tasks has increased in recent years. Mobile robotic devices can be used to perform a variety of different tasks. These mobile devices may operate in semi-autonomous or fully autonomous modes. These robotic devices may have an integrated navigation system for performing the variety of different tasks in semi-autonomous or fully autonomous modes. Mobile robotic devices often rely on visual landmarks for localization and navigation. Visual landmarks may not be present in certain areas of a worksite or in some worksites at all, such as large, open fields, for example. A worksite may be any area or location where robotic devices are used to perform physical tasks. Other visual landmarks that may be present, such as natural landmarks, for example, may have ambiguity and seasonal occlusion from vegetative growth during certain times or seasons.

### Summary

The different illustrative embodiments provide an apparatus comprising a landmark controller, a landmark deployment system, and a number of portable landmarks. The landmark controller has a landmark position and placement process. The landmark deployment system has a number of manipulative components. The number of portable landmarks is configured to be deployed to a number of locations within a worksite.

The different illustrative embodiments further provide a method for landmark placement by map. A map of a worksite is identified. A mission having a number of tasks for the worksite is identified. Landmark positions and placements are determined for the mission using the map of the worksite. A number of landmarks are deployed using the landmark positions and placements determined for the mission.

The different illustrative embodiments further provide a method for landmark placement by rule. A first landmark is positioned for localization on a perimeter of a worksite. A simultaneous localization and mapping process is executed until a distance to the first landmark reaches a predefined threshold. A determination is made as to whether the perimeter has been circled.

The features, functions, and advantages can be achieved independently in various embodiments of the present invention, or may be combined in yet other embodiments in which further details can be seen with reference to the following description and drawings.

### Brief Description of the Drawings

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present invention when read in conjunction with the accompanying drawings, wherein:
Figure 1 is a block diagram of a worksite environment in which an illustrative embodiment may be implemented;
Figure 2 is a block diagram of a data processing system in accordance with an illustrative embodiment;
Figure 3 is a block diagram of a navigation system in accordance with an illustrative embodiment;
Figure 4 is a block diagram of a mobility system in accordance with an illustrative embodiment;
Figure 5 is a block diagram of a sensor system in accordance with an illustrative embodiment;
Figure 6 is a block diagram of a behavior database in accordance with an illustrative embodiment;
Figure 7 is a block diagram of a mission database in accordance with an illustrative embodiment;
Figure 8 is a block diagram of a landmark deployment module in accordance with an illustrative embodiment;
Figure 9 is a block diagram of a worksite map in accordance with an illustrative embodiment;
Figure 10 is a block diagram of a worksite map in accordance with an illustrative embodiment;
Figure 11 is a flowchart illustrating a process for landmark placement by map in accordance with an illustrative embodiment;
Figure 12 is a flowchart illustrating a process for landmark placement by rule in accordance with an illustrative embodiment;
Figure 13 is a flowchart illustrating a process for executing a path plan in accordance with an illustrative embodiment;
Figure 14 is a flowchart illustrating a process for executing a path plan using simultaneous localization and mapping in accordance with an illustrative embodiment;
Figure 15 is a flowchart illustrating a process for executing an area coverage path plan using sector decomposition in accordance with an illustrative embodiment; and
Figure 16 is a flowchart illustrating a process for generating an area coverage path plan using sector decomposition in accordance with an illustrative embodiment.

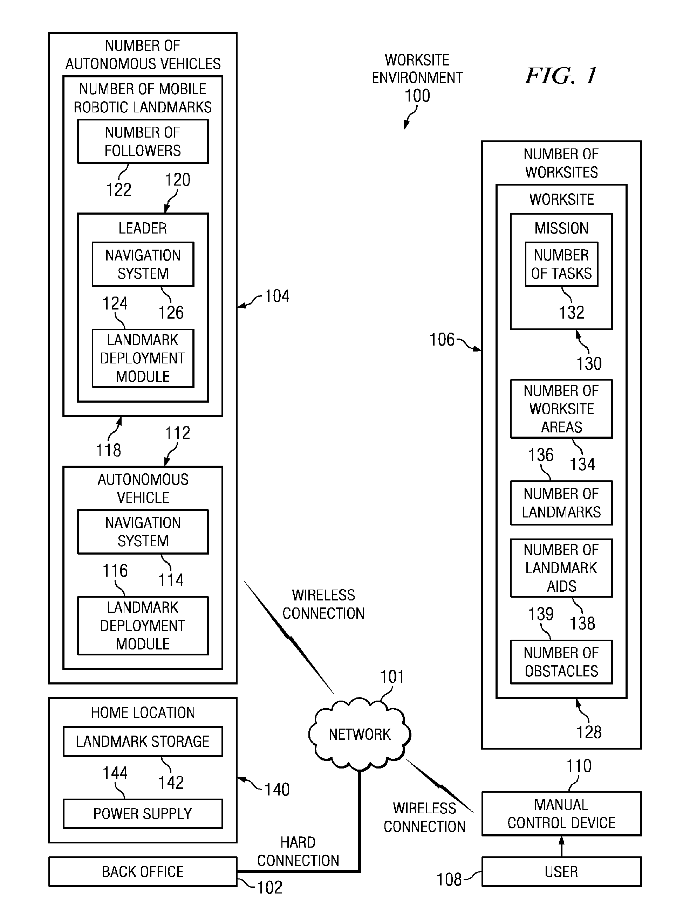

With reference to the figures, and in particular with reference to Figure 1, a block diagram of a worksite environment is depicted in which an illustrative embodiment may be implemented. Worksite environment 100 may be any type of worksite environment in which an autonomous vehicle can operate. In an illustrative example, worksite environment 100 may be a structure, building, worksite, area, yard, golf course, indoor environment, outdoor environment, different area, change in the needs of a user, and/or any other suitable worksite environment or combination of worksite environments.

As an illustrative example, a change in the needs of a user may include, without limitation, a user moving from an old location to a new location and operating an autonomous vehicle in the yard of the new location, which is different than the yard of the old location. As another illustrative example, a different area may include, without limitation, operating an autonomous vehicle in both an indoor environment and an outdoor environment, or operating an autonomous vehicle in a front yard and a back yard, for example.

Worksite environment 100 includes network 101 in one embodiment of the present invention. In this example, back office 102 may be a single computer or a distributed computing cloud. Back office 102 supports the physical databases and/or connections to external databases which may be used in the different illustrative embodiments. Back office 102 may supply databases to different vehicles, as well as provide online access to information from databases. Back office 102 may also provide path plans and/or missions for vehicles, such as number of autonomous vehicles 104, for example.

Worksite environment 100 may include number of autonomous vehicles 104, number of worksites 106, user 108, and manual control device 110. As used herein, a number of items means one or more items. For example, number of worksites 106 is one or more worksites.

Number of autonomous vehicles 104 may be any type of autonomous vehicle including, without limitation, a mobile robotic machine, a service robot, a field robot, a robotic mower, a robotic snow removal machine, a robotic leaf removal machine, a robotic lawn watering machine, a robotic vacuum, a mobile robotic landmark, and/or any other autonomous vehicle. Autonomous vehicle 112 may be an illustrative example of one of number of autonomous vehicles 104. Autonomous vehicle 112 may include navigation system 114 and landmark deployment module 116.

Navigation system 114 provides a base system for controlling the mobility, positioning, and navigation for autonomous vehicle 112. Base system capabilities may include base behaviors such as, for example, without limitation, base mobility functions for effectuating random area coverage of a worksite, base obstacle avoidance functions for contact switch obstacle avoidance, base dead reckoning for positioning functions, and/or any other combination of basic functionality for autonomous vehicle 112. Landmark deployment module 116 provides a system for planning and executing landmark deployment across a worksite, such as number of worksites 106. Landmarks deployed by landmark deployment module 116 may be used in localization and path planning by navigation system 114.

Number of mobile robotic landmarks 118 may be another illustrative example of number of autonomous vehicles 104. In one illustrative example, number of mobile robotic landmarks 118 may deploy autonomously in response to instructions received from landmark deployment module 116. In this example, autonomous vehicle 112 may be a utility vehicle designated for an area coverage task within number of worksites 106, and number of mobile robotic landmarks 118 may be deployed for use in localization by navigation system 114 of autonomous vehicle 112 during execution of the area coverage task.

In another illustrative example, number of mobile robotic landmarks 118 may include leader 120 and number of followers 122. Leader 120 may include landmark deployment module 124 and navigation system 126, similar to landmark deployment module 116 and navigation system 114 of autonomous vehicle 112. Leader 120 may be an illustrative example of autonomous vehicle 112 where autonomous vehicle 112 is a leader in a number of mobile robotic landmarks, for example. In this illustrative example, leader 120 may deploy autonomously to a location of a worksite and send instructions to number of followers 122 to deploy in a pattern following leader 120 to cover a worksite or area of a worksite, for example.

Number of worksites 106 may be any area within worksite environment 100 in which number of autonomous vehicles 104 can operate. Each worksite in number of worksites 106 may be associated with a mission. Worksite 128 is an illustrative example of one worksite in number of worksites 106. For example, in an illustrative embodiment, worksite 128 may be a back yard of a residence of a user. Worksite 128 includes mission 130 having number of tasks 132. In an illustrative example, mission 130 may include mowing the back yard of the residence of a user. Autonomous vehicle 112 may operate to perform number of tasks 132 of mission 130 within worksite 128. As used herein, "number" refers to one or more items. In one illustrative example, number of worksites 106 may include, without limitation, a primary yard and a secondary yard. The primary yard may be worksite 128, associated with mission 130. The secondary yard may be associated with another mission, for example.

Each worksite in number of worksites 106 may include a number of worksite areas, a number of landmarks, a number of landmark aids, and/or a number of obstacles. Worksite 128 includes number of worksite areas 134, number of landmarks 136, number of landmark aids 138, and number of obstacles 139. In an illustrative example, number of worksite areas 134 may be a number of locations within worksite 128, such as, for example, without limitation, a starting point, a midpoint, and an ending point. In another illustrative example, number of worksite areas 134 may include a sub-area of worksite 128.

Number of landmarks 136 may be any type of feature capable of being detected by number of autonomous vehicles 104 and used for identifying a location of a worksite. In an illustrative example, number of landmarks 136 may include, without limitation, cylindrical landmarks, colored landmarks, patterned landmarks, illuminated landmarks, vertical landmarks, natural landmarks, any combination of the foregoing, and/or any other suitable landmark. Patterned landmarks may include a visual pattern incorporated to provide distinctive information, for example. Illuminated landmarks may provide visual detection in low-light or no-light situations, such as night time, for example. Natural landmarks may include, for example, without limitation, tree trunks. Other types of landmarks may include, for example, building architectural features, driveways, sidewalks, curbs, fences, and/or any other suitable landmarks.

Number of landmark aids 138 may be identifiers used to mark specific locations where number of landmarks 136 are to be repeatedly positioned during landmark placement and positioning operations. Number of landmark aids 138 may include, for example, without limitation, a concave depression, a conical projection, radio frequency identification tags, and/or any other suitable identifier. Number of landmark aids 138 may be detectable by, for example, without limitation, a camera, radio frequency identification reader, and/or any other suitable detection means.

Number of obstacles 139 may be any type of object that occupies a physical space within worksite 128 and/or a location that number of autonomous vehicles 104 should not occupy or cross. The types of objects that occupy a physical space within worksite 128 may refer to objects that may be damaged by or cause damage to number of autonomous vehicles 104 if they were to contact each other, particularly with non-zero speed, for example. The locations which number of autonomous vehicles 104 should not occupy or should not cross may be independent of what occupies that space or is on the other side of the boundary, for example.

User 108 may be, without limitation, a human operator, a robotic operator, or some other external system. Manual control device 110 may be any type of manual controller, which allows user 108 to override autonomous behaviors and control number of autonomous vehicles 104. In an illustrative example, user 108 may use manual control device 110 to control movement of autonomous vehicle 112 from home location 140 to worksite 128 in order to perform number of tasks 132.

Home location 140 may be a docking station or storage station for number of autonomous vehicles 104. Home location 140 may include landmark storage 142 and power supply 144. Landmark storage 142 may be any type of storage facility for number of landmarks 136 and/or number of mobile robotic landmarks 118. For example, landmark storage 142 may be a secure storage unit for housing a number of landmarks between landmark deployments. Landmark storage 142 may include, for example, without limitation, a container, a structure, a building, a storage unit, a secure location within number of worksites 106, a vehicle, a towed trailer, and/or any other suitable landmark storage. Power supply 144 may provide power to number of autonomous vehicles 104 when number of autonomous vehicles 104 is at home location 140. In an illustrative example, power supply 144 may recharge a power store or power supply of number of autonomous vehicles 104. Power supply 144 may include, without limitation, a battery, mobile battery recharger, ultracapacitor, fuel cell, gas powered generator, photo cells, and/or any other suitable power source.

The illustration of worksite environment 100 in Figure 1 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in one illustrative embodiment, landmark deployment module 116 may be integrated with navigation system 114. In another illustrative embodiment, landmark deployment module 116 may be implemented on each of number of mobile robotic landmarks 118, for example.

The different illustrative embodiments recognize and take into account that currently used methods for robotic navigation using optical systems encounter increasing positioning error, relative to distance from a landmark due to landmark image boundary issues and off-by-one digitization errors. For a given accuracy requirement, landmarks used need to be within a given distance of the optical system used for ranging. Thus, for a given worksite, a certain number of landmarks are required at a number of locations throughout the worksite in order for an autonomous vehicle to navigate and execute area coverage tasks within the given accuracy.

The different illustrative embodiments further recognize and take into account that natural landmarks may not be present in certain areas of a worksite, or in some worksites at all, such as large, open fields or lawns which are to be mowed by autonomous mowers using landmark localization, for example. Placing a permanent landmark in such areas may interfere with recreation and/or other uses of the area, or take away from aesthetics of the area. Additionally, existing worksite landmarks, such as fence posts, for example, may have issues related to ambiguity and seasonal occlusion from vegetative growth, which make an artificial landmark preferable. However, the use of moveable, artificial landmarks includes a concern of theft and vandalism of the landmarks at a worksite.

Thus, one or more of the different illustrative embodiments provide an apparatus comprising a landmark controller, a landmark deployment system, and a number of portable landmarks. The landmark controller has a landmark position and placement process. The landmark deployment system has a number of manipulative components. The number of portable landmarks is configured to be deployed to a number of locations within a worksite.

The different illustrative embodiments further provide a method for landmark placement by map. A map of a worksite is identified. A mission having a number of tasks for the worksite is identified. Landmark positions and placements are determined for the mission using the map of the worksite. A number of landmarks are deployed using the landmark positions and placements determined for the mission.

The different illustrative embodiments further provide a method for landmark placement by rule. A first landmark is positioned for localization on a perimeter of a worksite. A simultaneous localization and mapping process is executed until a distance to the first landmark reaches a predefined threshold. A determination is made as to whether the perimeter has been circled.

The different illustrative embodiments provide the ability to autonomously and temporarily deploy artificial landmarks onto a worksite to support visual landmark localization. The portable landmarks may be deployed to a number of locations in order to maximize efficiency of area coverage tasks and minimize accuracy penalties of visual landmark localization. The landmarks may be recovered at a later time for reuse with optional secure storage while not in use in order to mitigate theft and vandalism concerns.

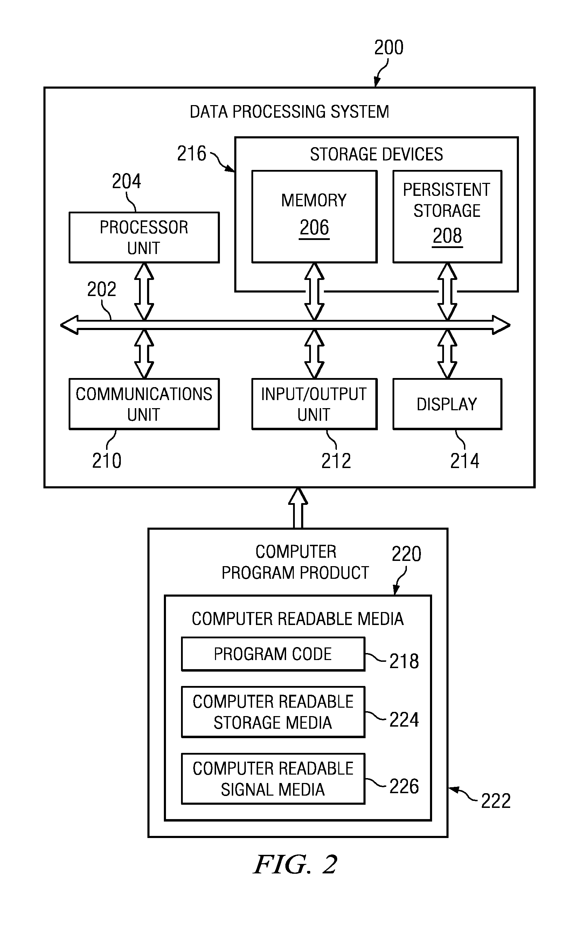

With reference now to Figure 2, a block diagram of a data processing system is depicted in accordance with an illustrative embodiment. Data processing system 200 is an example of a computer, such as back office 102 in Figure 1, in which computer usable program code or instructions implementing the processes may be located in the illustrative embodiments.

In this illustrative example, data processing system 200 includes communications fabric 202, which provides communications between processor unit 204, memory 206, persistent storage 208, communications unit 210, input/output (I/O) unit 212, and display 214.

Processor unit 204 serves to execute instructions for software that may be loaded into memory 206. Processor unit 204 may be a set of one or more processors or may be a multi-processor core, depending on the particular implementation. Further, processor unit 204 may be implemented using one or more heterogeneous processor systems, in which a main processor is present with secondary processors on a single chip. As another illustrative example, processor unit 204 may be a symmetric multi-processor system containing multiple processors of the same type.

Memory 206 and persistent storage 208 are examples of storage devices 216. A storage device is any piece of hardware that is capable of storing information, such as, for example without limitation, data, program code in functional form, and/or other suitable information, either on a temporary basis and/or a permanent basis. Memory 206, in these examples, may be, for example, a random access memory or any other suitable volatile or nonvolatile storage device. Persistent storage 208 may take various forms depending on the particular implementation. For example, persistent storage 208 may contain one or more components or devices. For example, persistent storage 208 may be a hard drive, a flash memory, a rewritable optical disk, a rewritable magnetic tape, or some combination of the above. The media used by persistent storage 208 also may be removable. For example, a removable hard drive may be used for persistent storage 208.

Communications unit 210, in these examples, provides for communications with other data processing systems or devices. In these examples, communications unit 210 is a network interface card. Communications unit 210 may provide communications through the use of either or both physical and wireless communications links.

Input/output unit 212 allows for input and output of data with other devices that may be connected to data processing system 200. For example, input/output unit 212 may provide a connection for user input through a keyboard, a mouse, and/or some other suitable input device. Further, input/output unit 212 may send output to a printer. Display 214 provides a mechanism to display information to a user.

Instructions for the operating system, applications and/or programs may be located in storage devices 216, which are in communication with processor unit 204 through communications fabric 202. In these illustrative examples, the instructions are in a functional form on persistent storage 208. These instructions may be loaded into memory 206 for execution by processor unit 204. The processes of the different embodiments may be performed by processor unit 204 using computer implemented instructions, which may be located in a memory, such as memory 206.

These instructions are referred to as program code, computer usable program code, or computer readable program code that may be read and executed by a processor in processor unit 204. The program code in the different embodiments may be embodied on different physical or tangible computer readable media, such as memory 206 or persistent storage 208.

Program code 218 is located in a functional form on computer readable media 220 that is selectively removable and may be loaded onto or transferred to data processing system 200 for execution by processor unit 204. Program code 218 and computer readable media 220 form computer program product 222 in these examples. In one example, computer readable media 220 may be in a tangible form, such as, for example, an optical or magnetic disc that is inserted or placed into a drive or other device that is part of persistent storage 208 for transfer onto a storage device, such as a hard drive that is part of persistent storage 208. In a tangible form, computer readable media 220 also may take the form of a persistent storage, such as a hard drive, a thumb drive, or a flash memory that is connected to data processing system 200. The tangible form of computer readable media 220 is also referred to as computer recordable storage media. In some instances, computer readable media 220 may not be removable.

Alternatively, program code 218 may be transferred to data processing system 200 from computer readable media 220 through a communications link to communications unit 210 and/or through a connection to input/output unit 212. The communications link and/or the connection may be physical or wireless in the illustrative examples. The computer readable media also may take the form of non-tangible media, such as communications links or wireless transmissions containing the program code.

In some illustrative embodiments, program code 218 may be downloaded over a network to persistent storage 208 from another device or data processing system for use within data processing system 200. For instance, program code stored in a computer readable storage medium in a server data processing system may be downloaded over a network from the server to data processing system 200. The data processing system providing program code 218 may be a server computer, a client computer, or some other device capable of storing and transmitting program code 218.

The different components illustrated for data processing system 200 are not meant to provide architectural limitations to the manner in which different embodiments may be implemented. The different illustrative embodiments may be implemented in a data processing system including components in addition to or in place of those illustrated for data processing system 200. Other components shown in Figure 2 can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system 200 is any hardware apparatus that may store data. Memory 206, persistent storage 208 and computer readable media 220 are examples of storage devices in a tangible form.

In another example, a bus system may be used to implement communications fabric 202 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 206 or a cache such as found in an interface and memory controller hub that may be present in communications fabric 202.

As used herein, the phrase "at least one of", when used with a list of items, means that different combinations of one or more of the items may be used and only one of each item in the list may be needed. For example, "at least one of item A, item B, and item C" may include, for example, without limitation, item A or item A and item B. This example also may include item A, item B, and item C, or item B and item C.

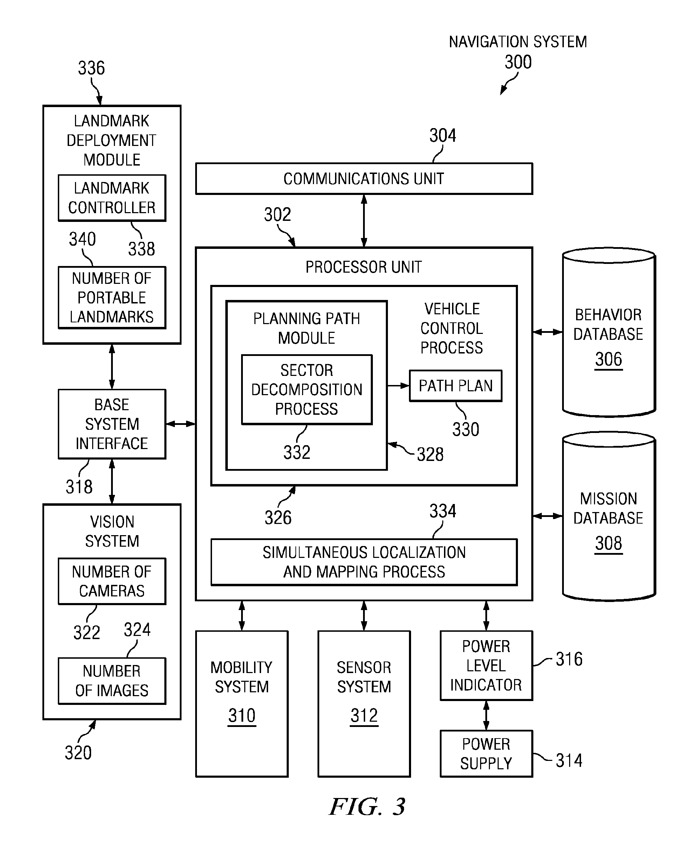

With reference now to Figure 3, a block diagram of a navigation system is depicted in accordance with an illustrative embodiment. Navigation system 300 is an example of one implementation of navigation system 114 in Figure 1.

Navigation system 300 includes processor unit 302, communications unit 304, behavior database 306, mission database 308, mobility system 310, sensor system 312, power supply 314, power level indicator 316, base system interface 318, vision system 320, and landmark deployment module 336. Vision system 320 includes number of cameras 322. Number of cameras 322 may be used for landmark localization by navigation system 300, for example. Number of cameras 322 may include, for example, without limitation, a color camera, a black and white camera, a digital camera, an infrared camera, and/or any other suitable camera.

In one illustrative example, number of cameras 322 may be oriented to capture a view that is down and horizontal relative to the autonomous vehicle associated with navigation system 300, such as number of autonomous vehicles 104 in Figure 1, for example. In this illustrative example, the orientation of number of cameras 322 may enable autonomous vehicle behaviors, such as boundary and/or perimeter following, for example, in addition to landmark identification and localization. In an illustrative example where number of cameras 322 includes a color camera, boundary following behaviors may use number of cameras 322 to identify a color boundary, such as green grass contrasted with a concrete curb, for example. In another illustrative example, number of cameras 322 may be oriented to capture a view facing perpendicular to the direction of travel of the autonomous vehicle associated with navigation system 300, such as autonomous vehicle 112 in Figure 1, for example. In yet another illustrative example, number of cameras 322 may be oriented to capture a view facing the landmark the autonomous vehicle associated with navigation system 300 is traveling around, for example.

Vision system 320 operates to provide depth of field perception by providing number of images 324 from number of cameras 322 for enhanced vision capabilities of navigation system 300. Vision system 320 may be, for example, without limitation, a stereo vision system, an asymmetric vision system, a stadiametric ranging vision system, and/or any other suitable vision system. Number of cameras 322 may be used to capture number of images 324 of a worksite or worksite area, such as worksite 128 in Figure 1, for example. Number of images 324 may be transferred over base system interface 318 to processor unit 302 for use in landmark identification and path planning, for example. As used herein, "number of" refers to one or more images.

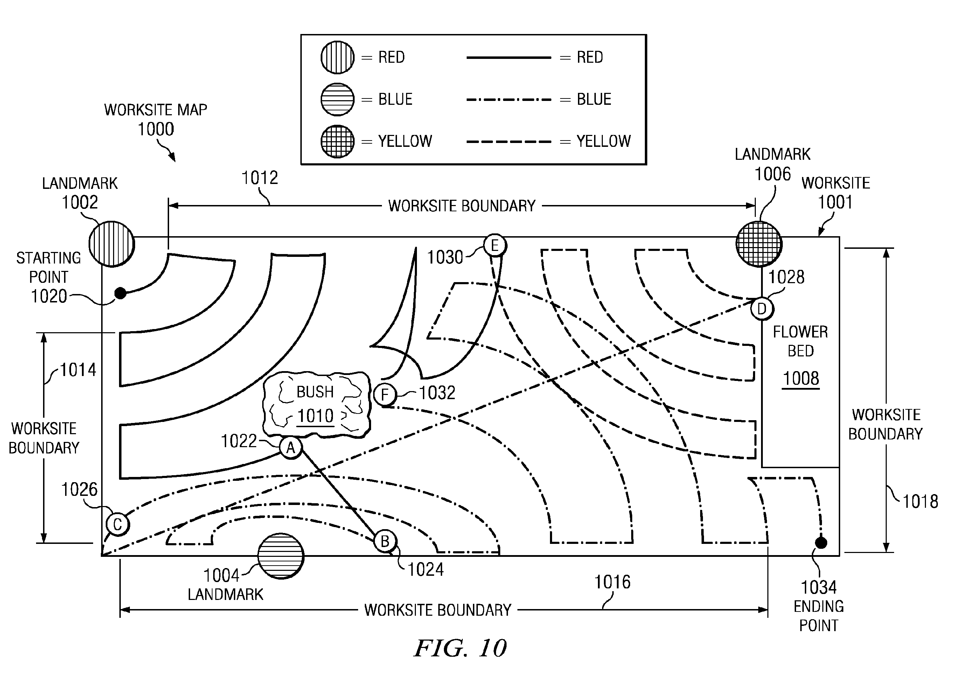

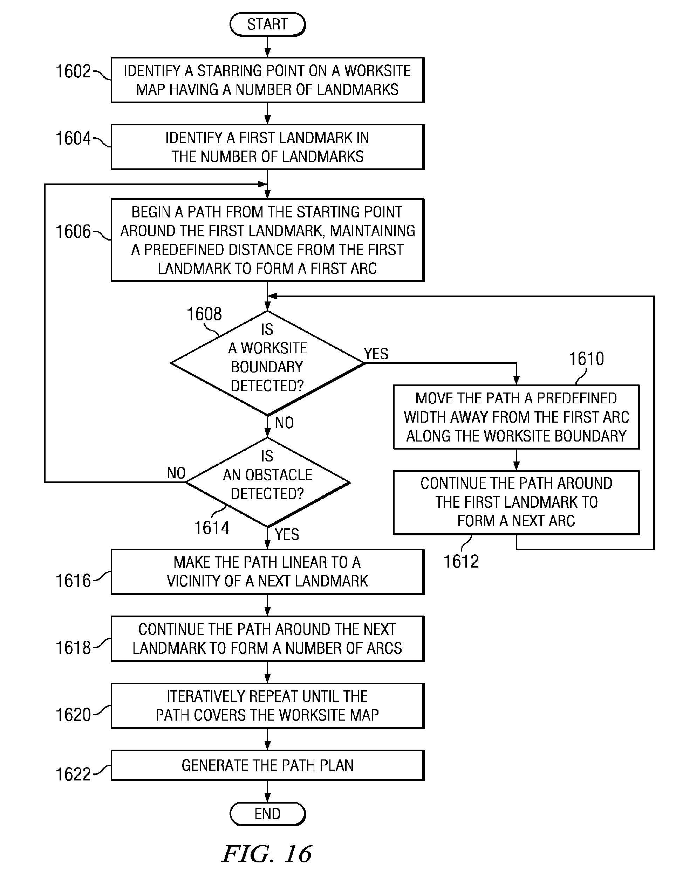

Processor unit 302 may be an example of one implementation of data processing system 200 in Figure 2. Processor unit 302 includes vehicle control process 326. Vehicle control process 326 is configured to communicate with and control mobility system 310. Vehicle control process 326 includes path planning module 328. Path planning module 328 may use information from behavior database 306 and mission database 308, along with number of images 324 received from vision system 320, to generate path plan 330. Path planning module 328 may generate path plan 330 using sector decomposition process 332 to plan a path for a worksite, for example. A path may be any length, for example, one foot or ten feet, and may change as the position of the autonomous vehicle relative to a landmark, obstacle, perimeter, and/or boundary changes. Sector decomposition process 332 is an area coverage algorithm, as shown in more illustrative detail in Figures 10 and 16. Sector decomposition process 332 may enable path planning module 328 and/or vehicle control process 326 to plan and execute path plan 330 with only one visible landmark at any given location of a worksite, for example. Sector decomposition process 332 generates paths which follow arcs at predefined distances from landmarks. The predefined distances may be, for example, without limitation, equal to the width of an autonomous vehicle, equal to the task coverage width for one pass of an autonomous vehicle, and/or any other specified distance. In one illustrative example, sector decomposition process 332 may generate paths with arcs that are progressively closer together as the autonomous vehicle proceeds further away from a landmark in order to compensate for site-specific error. Sector decomposition process 332 may also generate linear paths for point-to-point behaviors in order to move an autonomous vehicle from one landmark to another landmark, for example.

Landmark deployment module 336 may interact with processor unit 302 using base system interface 318, in one illustrative example. Landmark deployment module 336 provides a system for planning and executing landmark deployment across a worksite, such as number of worksites 106 in Figure 1. Landmark deployment module 336 includes landmark controller 338 and number of portable landmarks 340. Number of portable landmarks 340 may be deployed by landmark deployment module 336 for use in localization and path planning by navigation system 300, for example.

In one illustrative example, landmark controller 338 may retrieve a worksite map from mission database 308 in order to plan for landmark deployment across a worksite, such as worksite 128 in Figure 1. Landmark controller 338 may identify a number of locations across the worksite where number of portable landmarks 340 will be deployed in order to provide navigation system 300 with sufficient landmarks for localization and/or path planning. Landmark controller 338 may also update the worksite map retrieved from mission database 308 with the number of landmark locations planned, and store the worksite map with landmark locations in mission database 308.

In another illustrative example, path planning module 328 may retrieve a worksite map from mission database 308 in order to plan a path, such as path plan 330, for landmark deployment across the worksite. A worksite map is a map that identifies a worksite, such as worksite 128 in Figure 1, for example. A worksite map may be used to identify a location for an area coverage task and plan a path for execution of the area coverage task on a worksite. The worksite map may have a number of landmarks locations identified in this example. Vehicle control process 326 may use path plan 330 to send commands and/or signals to mobility system 310 in order to move an autonomous vehicle associated with navigation system 300 according to path plan 330. Landmark controller 338 may initiate landmark deployment using path plan 330 as the autonomous vehicle travels across the worksite, for example. After landmark deployment, vehicle control process 326 may also initiate an area coverage task in the worksite using path plan 330 and/or number of portable landmarks 340 deployed across the worksite for localization and navigation. Vehicle control process 326 may initiate the area coverage task in response to a trigger, such as, for example, without limitation, a button being selected on an autonomous vehicle, a command from a manual control device, a software-driven event, a time-driven event, and/or any other suitable trigger.

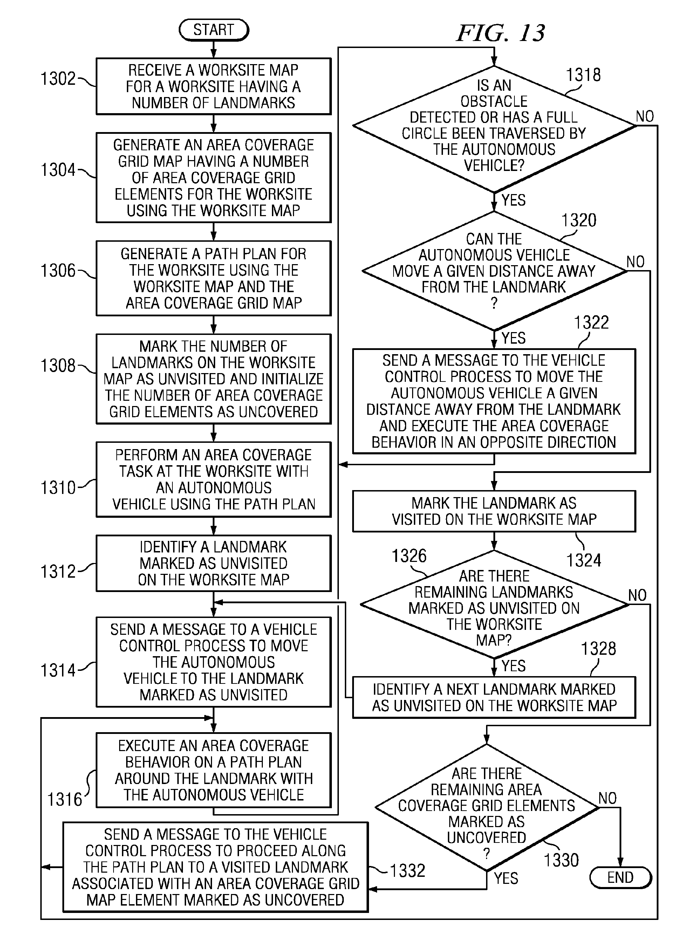

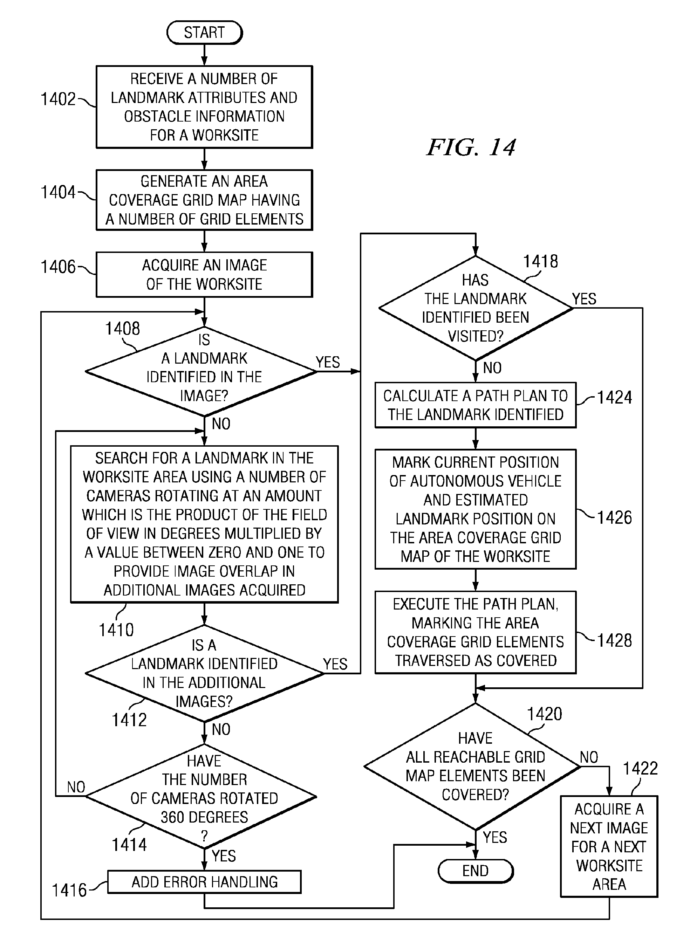

Processor unit 302 may also include simultaneous localization and mapping process 334, as shown in more illustrative detail in Figures 13 and 14. Simultaneous localization and mapping process 334 may generate a worksite map having a path plan, such as path plan 330, during operation of an area coverage task by the autonomous vehicle associated with navigation system 300, for example.

Processor unit 302 may further communicate with and access data stored in behavior database 306 and mission database 308. Accessing data may include any process for storing, retrieving, and/or acting on data in behavior database 306 and/or mission database 308. For example, accessing data may include, without limitation, using a lookup table housed in behavior database 306 and/or mission database 308, running a query process using behavior database 306 and/or mission database 308, and/or any other suitable process for accessing data stored in a database.

Processor unit 302 receives information from sensor system 312 and may use sensor information in conjunction with behavior data from behavior database 306 when controlling mobility system 310. Processor unit 302 may also receive control signals from an outside controller, such as manual control device 110 operated by user 108 in Figure 1, for example. These control signals may be received by processor unit 302 using communications unit 304.

Communications unit 304 may provide communications links to processor unit 302 to receive information. This information includes, for example, data, commands, and/or instructions. Communications unit 304 may take various forms. For example, communications unit 304 may include a wireless communications system, such as a cellular phone system, a Wi-Fi wireless system, or some other suitable wireless communications system.

Communications unit 304 may also include a wired connection to an optional manual controller, such as manual control device 110 in Figure 1, for example. Further, communications unit 304 also may include a communications port, such as, for example, a universal serial bus port, a serial interface, a parallel port interface, a network interface, or some other suitable port to provide a physical communications link. Communications unit 304 may be used to communicate with an external control device or user, for example.

In one illustrative example, processor unit 302 may receive control signals from manual control device 110 operated by user 108 in Figure 1. These control signals may override autonomous behaviors of vehicle control process 326 and allow user 108 to stop, start, steer, and/or otherwise control the autonomous vehicle associated with navigation system 300.

Behavior database 306 contains a number of behavioral actions which vehicle control process 326 may utilize when controlling mobility system 310. Behavior database 306 may include, without limitation, basic vehicle behaviors, area coverage behaviors, perimeter behaviors, obstacle avoidance behaviors, manual control behaviors, power supply behaviors, and/or any other suitable behaviors for an autonomous vehicle.

Mobility system 310 provides mobility for an autonomous vehicle, such as number of autonomous vehicles 104 in Figure 1. Mobility system 310 may take various forms. Mobility system 310 may include, for example, without limitation, a propulsion system, steering system, braking system, and mobility components. In these examples, mobility system 310 may receive commands from vehicle control process 326 and move an associated autonomous vehicle in response to those commands.

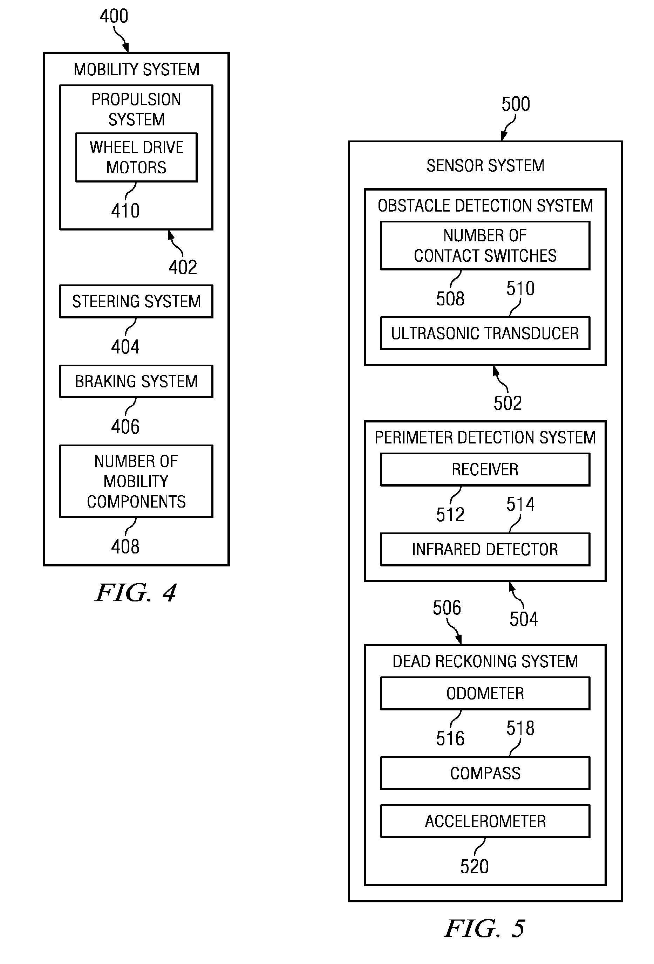

Sensor system 312 may include a number of sensor systems for collecting and transmitting sensor data to processor unit 302. For example, sensor system 312 may include, without limitation, a dead reckoning system, an obstacle detection system, a perimeter detection system, and/or some other suitable type of sensor system, as shown in more illustrative detail in Figure 5. Sensor data is information collected by sensor system 312.

Power supply 314 provides power to components of navigation system 300 and the associated autonomous vehicle, such as autonomous vehicle 112 in Figure 1, for example. Power supply 314 may include, without limitation, a battery, mobile battery recharger, ultracapacitor, fuel cell, gas powered generator, photo cells, and/or any other suitable power source. Power level indicator 316 monitors the level of power supply 314 and communicates the power supply level to processor unit 302. In an illustrative example, power level indicator 316 may send information about a low level of power in power supply 314. Processor unit 302 may access behavior database 306 to employ a behavioral action in response to the indication of a low power level, in this illustrative example. For example, without limitation, a behavioral action may be to cease operation of a task and seek a recharging station in response to the detection of a low power level.

Base system interface 318 provides power and data communications between vision system 320, landmark deployment module 336, and the other components of navigation system 300. In an illustrative example, number of images 324 may be transferred to processor unit 302 from vision system 320 using base system interface 318. In another illustrative example, landmark controller 338 may generate a path plan for the autonomous vehicle associated with navigation system 300 and transfer the path plan to vehicle control process 326 via base system interface 318, for example.

The illustration of navigation system 300 in Figure 3 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in an illustrative embodiment, landmark deployment module 336 may be a separate component from navigation system 300 and interact with navigation system 300 using communications unit 304. In yet another illustrative embodiment, navigation system 300 may be implemented in each of number of portable landmarks 340, providing autonomous mobile robotic landmarks, for example.

With reference now to Figure 4, a block diagram of a mobility system is depicted in accordance with an illustrative embodiment. Mobility system 400 is an example of one implementation of mobility system 310 in Figure 3.

Mobility system 400 provides mobility for autonomous vehicles associated with a navigation system, such as navigation system 300 in Figure 3. Mobility system 400 may take various forms. Mobility system 400 may include, for example, without limitation, propulsion system 402, steering system 404, braking system 406, and number of mobility components 408. In these examples, propulsion system 402 may propel or move an autonomous vehicle, such as number of autonomous vehicles 104 in Figure 1, in response to commands from a navigation system, such as navigation system 300 in Figure 3.

Propulsion system 402 may maintain or increase the speed at which an autonomous vehicle moves in response to instructions received from a processor unit of a navigation system. Propulsion system 402 may be an electrically controlled propulsion system. Propulsion system 402 may be, for example, without limitation, an internal combustion engine, an internal combustion engine/electric hybrid system, an electric engine, or some other suitable propulsion system. In an illustrative example, propulsion system 402 may include wheel drive motors 410. Wheel drive motors 410 may be an electric motor incorporated into a mobility component, such as a wheel, that drives the mobility component directly. In one illustrative embodiment, steering may be accomplished by differentially controlling wheel drive motors 410.

Steering system 404 controls the direction or steering of an autonomous vehicle in response to commands received from a processor unit of a navigation system. Steering system 404 may be, for example, without limitation, an electrically controlled hydraulic steering system, an electrically driven rack and pinion steering system, a differential steering system, or some other suitable steering system. In an illustrative example, steering system 404 may include a dedicated wheel configured to control number of mobility components 408.

Braking system 406 may slow down and/or stop an autonomous vehicle in response to commands received from a processor unit of a navigation system. Braking system 406 may be an electrically controlled braking system. This braking system may be, for example, without limitation, a hydraulic braking system, a friction braking system, a regenerative braking system using wheel drive motors 410, or some other suitable braking system that may be electrically controlled. In one illustrative embodiment, a navigation system may receive commands from an external controller, such as manual control device 110 in Figure 1, to activate an emergency stop. The navigation system may send commands to mobility system 400 to control braking system 406 to perform the emergency stop, in this illustrative example.

Number of mobility components 408 provides autonomous vehicles with the capability to move in a number of directions and/or locations in response to instructions received from a processor unit of a navigation system and executed by propulsion system 402, steering system 404, and braking system 406. Number of mobility components 408 may be, for example, without limitation, wheels, tracks, feet, rotors, propellers, wings, and/or other suitable components.

The illustration of mobility system 400 in Figure 4 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 5, a block diagram of a sensor system is depicted in accordance with an illustrative embodiment. Sensor system 500 is an example of one implementation of sensor system 312 in Figure 3.

Sensor system 500 includes a number of sensor systems for collecting and transmitting sensor data to a processor unit of a navigation system, such as navigation system 300 in Figure 3. Sensor system 500 includes obstacle detection system 502, perimeter detection system 504, and dead reckoning system 506.

Obstacle detection system 502 may include, without limitation, number of contact switches 508 and ultrasonic transducer 510. Number of contact switches 508 detects contact by an autonomous vehicle with an external object in the environment, such as worksite environment 100 in Figure 1, for example. Number of contact switches 508 may include, for example, without limitation, bumper switches. Ultrasonic transducer 510 generates high frequency sound waves and evaluates the echo received back. Ultrasonic transducer 510 calculates the time interval between sending the signal, or high frequency sound waves, and receiving the echo to determine the distance to an object.

Perimeter detection system 504 detects a perimeter or boundary of a worksite, such as worksite 128 in Figure 1, and sends information about the perimeter detection to a processor unit of a navigation system. Perimeter detection system 504 may include, without limitation, receiver 512 and infrared detector 514. Receiver 512 detects electrical signals, which may be emitted by a wire delineating the perimeter of a worksite, such as worksite 128 in Figure 1, for example. Infrared detector 514 detects infrared light, which may be emitted by an infrared light source along the perimeter of a worksite, such as worksite 128 in Figure 1, for example.

In an illustrative example, receiver 512 may detect an electrical signal from a perimeter wire, and send information about that detected signal to a processor unit of a navigation system, such as navigation system 300 in Figure 3. The navigation system may then send commands to a mobility system, such as mobility system 400 in Figure 4, to alter the direction or course of an autonomous vehicle associated with the navigation system, in this illustrative example.

Dead reckoning system 506 estimates the current position of an autonomous vehicle associated with the navigation system. Dead reckoning system 506 estimates the current position based on a previously determined position and information about the known or estimated speed over elapsed time and course. Dead reckoning system 506 may include, without limitation, odometer 516, compass 518, and accelerometer 520. Odometer 516 is an electronic or mechanical device used to indicate distance traveled by a machine, such as number of autonomous vehicles 104 in Figure 1. Compass 518 is a device used to determine position or direction relative to the earth's magnetic poles. Accelerometer 520 measures the acceleration it experiences relative to freefall.

The illustration of sensor system 500 in Figure 5 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

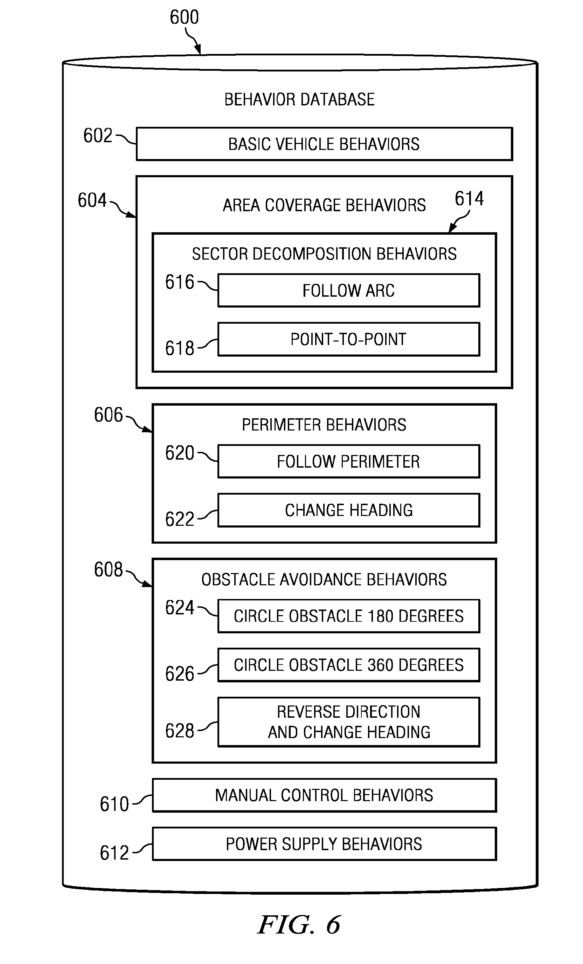

With reference now to Figure 6, a block diagram of a behavior database is depicted in accordance with an illustrative embodiment. Behavior database 600 is an example of one implementation of behavior database 306 in Figure 3.

Behavior database 600 includes a number of behavioral actions which vehicle control process 326 of navigation system 300 may utilize when controlling mobility system 310 in Figure 3. Behavior database 600 may include, without limitation, basic vehicle behaviors 602, area coverage behaviors 604, perimeter behaviors 606, obstacle avoidance behaviors 608, manual control behaviors 610, power supply behaviors 612, and/or any other suitable behaviors for an autonomous vehicle.

Basic vehicle behaviors 602 provide actions for a number of basic tasks an autonomous vehicle may perform. Basic vehicle behaviors 602 may include, without limitation, mowing, vacuuming, floor scrubbing, leaf removal, snow removal, watering, spraying, security, and/or any other suitable task.

Area coverage behaviors 604 provide actions for area coverage when performing basic vehicle behaviors 602. Area coverage behaviors 604 may include, without limitation, sector decomposition behaviors 614. Sector decomposition behaviors 614 may include, for example, without limitation, follow arc 616, point-to-point 618, and/or any other suitable behaviors.

Perimeter behaviors 606 provide actions for a navigation system in response to perimeter detection, such as by perimeter detection system 504 in Figure 5. In an illustrative example, perimeter behaviors 606 may include, without limitation, follow perimeter 620, change heading 622, and/or any other suitable behaviors. Change heading 622 may operate to change the heading for an autonomous vehicle by a number of degrees in order to stay within a perimeter. Follow perimeter 620 may operate to move an autonomous vehicle parallel to a perimeter for a predefined distance. A predefined distance may be, for example, a distance equal to the width of the autonomous vehicle less an error amount.

Obstacle avoidance behaviors 608 provide actions for a navigation system to avoid collision with objects in an environment around an autonomous vehicle. In an illustrative example, obstacle avoidance behaviors 608 may include, without limitation, circle obstacle 180 degrees 624, circle obstacle 360 degrees 626, reverse direction and change heading 628, and/or any other suitable behaviors. Circle obstacle 180 degrees 624 may operate to direct an autonomous vehicle around an obstacle to continue along an original path, for example. Circle obstacle 360 degrees 626 may operate to direct an autonomous vehicle around the entirety of an obstacle in order to perform a task on all areas around the obstacle, for example. Reverse direction and change heading 628 may operate to reverse direction and change heading of an autonomous vehicle by a number of degrees before moving forward in order to avoid collision with an object detected by an obstacle detection system, such as obstacle detection system 502 in Figure 5.

Manual control behaviors 610 provide actions for a navigation system to disable autonomy and take motion control from a user, such as user 108 in Figure 1, for example. Power supply behaviors 612 provide actions for a navigation system to take a number of actions in response to a detected level of power in a power supply, such as power supply 314 in Figure 3. In an illustrative example, power supply behaviors 612 may include, without limitation, stopping the task operation of an autonomous vehicle and seeking out additional power or power recharge for the autonomous vehicle.

The illustration of behavior database 600 in Figure 6 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

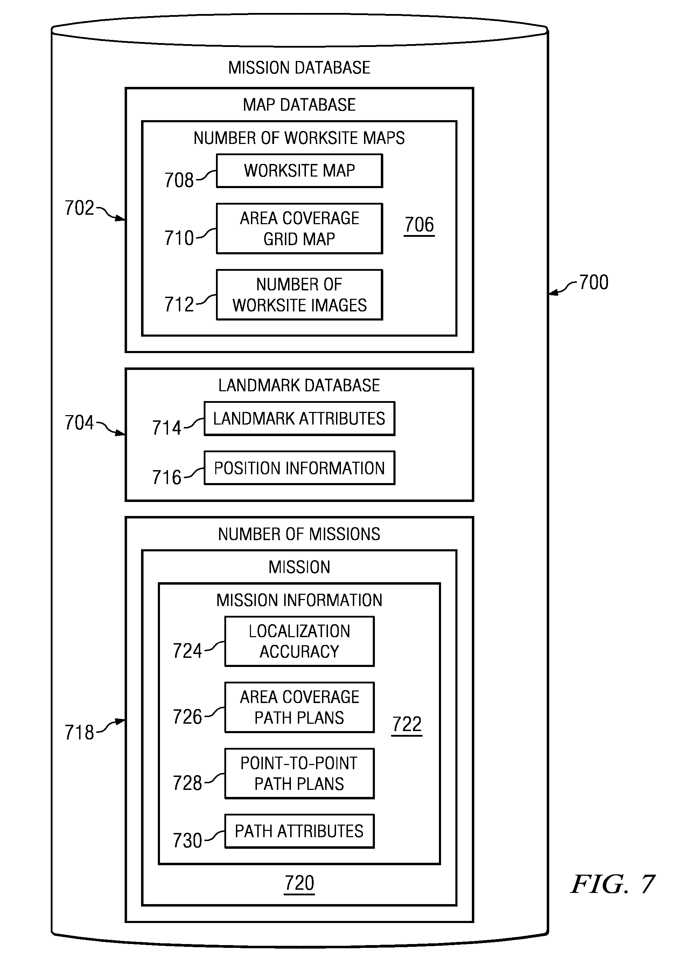

With reference now to Figure 7, a block diagram of a mission database is depicted in accordance with an illustrative embodiment. Mission database 700 is an example of one implementation of mission database 308 in Figure 3.

Mission database 700 includes a number of databases which processor unit 302 of navigation system 300 may utilize when planning a path and/or controlling mobility system 310 in Figure 3. Mission database 700 also includes a number of databases landmark deployment module 336 may utilize when planning a landmark deployment path and/or landmark deployment locations and positioning for a worksite. Mission database 700 may include, without limitation, map database 702, landmark database 704, number of missions 718, and/or any other suitable database of information for an autonomous vehicle.

Map database 702 includes number of worksite maps 706. Number of worksite maps 706 may correspond to number of worksites 106 in Figure 1, for example. In one illustrative embodiment, number of worksite maps 706 may be loaded into map database 702 from a remote location, such as back office 102 in Figure 1 using network 101. In another illustrative embodiment, number of worksite maps 706 may be stored in map database 702 after being generated by simultaneous localization and mapping process 334 in Figure 3. In yet another illustrative embodiment, number of worksite maps 706 may be loaded into map database 702 by a user, such as user 108 in Figure 1 over base system interface 318 and/or communications unit 304 in Figure 3, for example. In yet another illustrative embodiment, number of worksite maps 706 may be stored in map database 702 after being updated with landmark locations by landmark deployment module 336 in Figure 3, for example. In an illustrative example, simultaneous localization and mapping process 334 in Figure 3 may generate a worksite map during an initial operation in a worksite, such as landmark deployment, and store the worksite map generated in map database 702 for later use in a future operation in the same worksite.

Number of worksite maps 706 may include, for example, without limitation, worksite map 708, area coverage grid map 710, number of worksite images 712, and/or any other suitable worksite map. Worksite map 708 may be an a priori map stored in number of worksite maps 706, which includes landmark locations and obstacle information for a worksite, such as worksite 128 in Figure 1, for example. Worksite map 708 may be generated by a user, such as user 108 in Figure 1, for example, identifying landmark locations and obstacles for a worksite on a map and/or image of the worksite. In an illustrative example, worksite map 708 may be used by number of autonomous vehicles 104 in Figure 1 to plan an area coverage path for the worksite, taking into account the landmarks and obstacles for the worksite.

Area coverage grid map 710 may be, for example, without limitation, a worksite map including an area coverage grid overlay, a worksite image including an area coverage grid overlay, an area coverage grid for a bounded space and/or worksite dimensions, and/or any other suitable area coverage grid map. In an illustrative example, navigation system 300 in Figure 3 may generate area coverage grid map 710 using worksite map 708 provided by user 108 in Figure 1. In another illustrative example, navigation system 300 may generate area coverage grid map 710 using landmark attribute information and obstacle information received from a user, such as user 108 in Figure 1. In yet another illustrative example, number of autonomous vehicles 104 in Figure 1 may acquire number of worksite images 712 using a vision system, such as vision system 320 in Figure 3, and generate area coverage grid map 710 using number of worksite images 712.

Landmark database 704 may include landmark attributes 714 and position information 716. Landmark attributes 714 may include, for example, without limitation, landmark images, landmark definitions, landmark characteristics, and/or any other suitable landmark attributes used to identify a number of landmarks in a worksite, such as number of landmarks 136 in worksite 128 in Figure 1, for example. Landmark images may include stored images of a number of different types of landmarks, for example. Landmark definitions may refer to names and/or descriptions associated with a number of landmarks, for example. Landmark characteristics may include, for example, without limitation, shape, color, texture, and/or any other suitable characteristic for identifying a number of landmarks. Position information 716 identifies the placement of a number of landmarks relative to locations within a worksite identified, such as worksite 128 in Figure 1, for example. Position information 716 may also indicate the orientation of a number of landmarks relative to other landmarks, objects, and/or locations within a worksite identified. In one illustrative example, the orientation of a landmark may be according to the magnetic poles of Earth, such as oriented to face true north, for example. In another illustrative example, the orientation of a number of landmarks may be according to a perimeter or boundary of a worksite. Position information 716 may be associated with number of worksite maps 706 stored in map database 702, for example.

Number of missions 718 includes information about a number of different missions for a number of worksites, such as number of worksites 106 in Figure 1. Number of missions 718 may be stored and/or updated by user 108 in Figure 1, for example, or initiated ad hoc by user 108 and stored concurrent with execution of the mission in number of missions 718 for later use. Number of missions 718 may include, for example, without limitation, mission information such as localization accuracy, area coverage path plans, point-to-point path plans, path attributes, and/or any other suitable mission information. Mission 720 may be an illustrative example of one implementation of number of missions 718 and/or mission 130 in Figure 1.

Mission 720 may include mission information 722. Mission information 722 includes localization accuracy 724, area coverage path plans 726, point-to-point path plans 728, and path attributes 730. Path attributes 730 may be, for example, without limitation, straight lines, arcs, circles, and/or any other suitable path attribute.

The illustration of mission database 700 in Figure 7 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

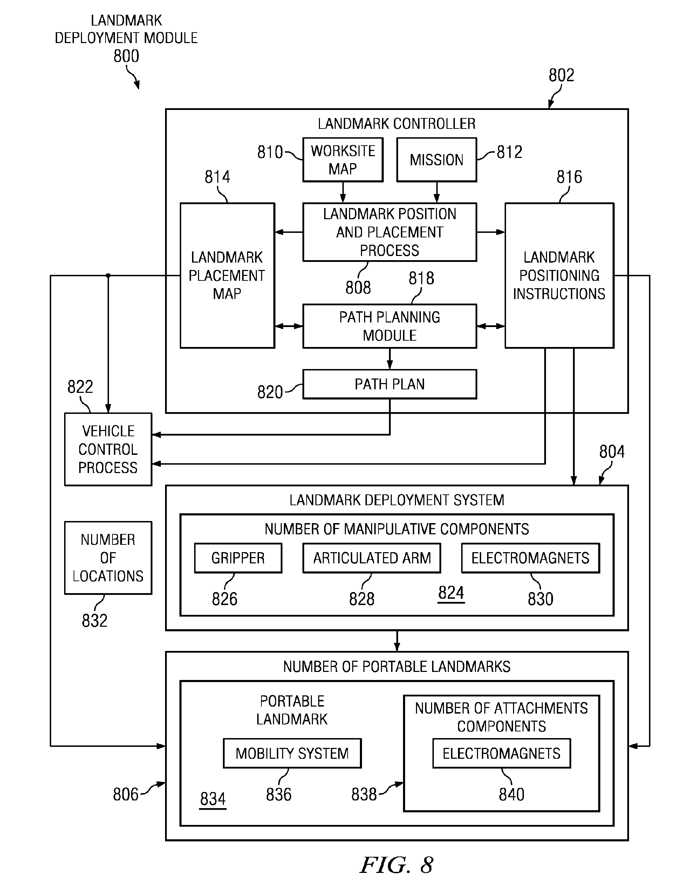

With reference now to Figure 8, a block diagram of a landmark deployment module is depicted in accordance with an illustrative embodiment. Landmark deployment module 800 may be an illustrative example of one implementation of landmark deployment module 116 in Figure 1 and/or landmark deployment module 336 in Figure 3.

Landmark deployment module 800 includes landmark controller 802, landmark deployment system 804, and number of portable landmarks 806. Landmark controller 802 is an illustrative example of one implementation of landmark controller 338 in Figure 3.

Landmark controller 802 includes landmark position and placement process 808. Landmark position and placement process 808 retrieves worksite map 810 and mission 812 from a database, such as mission database 308 in Figure 3. Landmark position and placement process 808 uses worksite map 810 and mission 812 to determine number of locations 832 for placement of number of portable landmarks 806. Landmark position and placement process 808 generates landmark placement map 814 and landmark positioning instructions 816.

Landmark controller 802 may also include path planning module 818. Path planning module 818 may generate path plan 820 for execution of landmark deployment using landmark placement map 814. Landmark controller 802 may send path plan 820 to vehicle control process 822, for example. In another illustrative example, landmark controller 802 may send landmark placement map 814 and landmark positioning instructions 816 directly to vehicle control process 822. In this example, vehicle control process 822 may include a path planning module, such as path planning module 818, for generating path plan 820.

In another illustrative example, number of portable landmarks 806 may be mobile robotic landmarks, such as number of mobile robotic landmarks 118 in Figure 1. In this illustrative example, landmark controller 802 may send landmark placement map 814 and landmark positioning instructions 816 directly to number of portable landmarks 806 for autonomous deployment and positioning.

Landmark deployment system 804 includes number of manipulative components 824. Number of manipulative components 824 may include, for example, without limitation, gripper 826, articulated arm 828, electromagnets 830, and/or any other suitable manipulative component. Number of manipulative components 824 may control movement and positioning of number of portable landmarks 806. In an illustrative example, gripper 826 may grip number of portable landmarks 806 during transport of number of portable landmarks 806 by an autonomous vehicle associated with landmark deployment module 800, such as autonomous vehicle 112 in Figure 1.

Number of portable landmarks 806 may be any type of landmark capable of being detected by number of autonomous vehicles 104. In an illustrative example, number of portable landmarks 806 may include, without limitation, cylindrical landmarks, colored landmarks, patterned landmarks, illuminated landmarks, vertical landmarks, any combination of the foregoing, and/or any other suitable landmark. Patterned landmarks may include a visual pattern incorporated to provide distinctive information, for example. Illuminated landmarks may provide visual detection in low-light or no-light situations, such as night time, for example.

Portable landmark 834 may be an illustrative example of one implementation of number of portable landmarks 806. Portable landmark 834 includes mobility system 836 and number of attachment components 838. Mobility system 836 may be an illustrative example of one implementation of mobility system 400 in Figure 4. Mobility system 836 provides capabilities for portable landmark 834 to autonomously move to number of locations 832 and position portable landmark 834 according to landmark placement map 814 and landmark positioning instructions 816. Number of attachment components 838 provides for attachment and detachment of number of portable landmarks 806 to and from each other. Number of attachment components 838 may include, for example, without limitation, electromagnets 840.

In an illustrative example, electromagnets 840 may connect portable landmark 834 to another portable landmark and/or an autonomous vehicle responsible for deploying portable landmark 834. Electromagnets 840 may be selectively disabled at number of locations 832 in order to drop off, or position, portable landmark 834 at a location within number of locations 832, in this example. Landmark controller 802 may control electromagnets 840, for example.

The illustration of landmark deployment module 800 in Figure 8 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

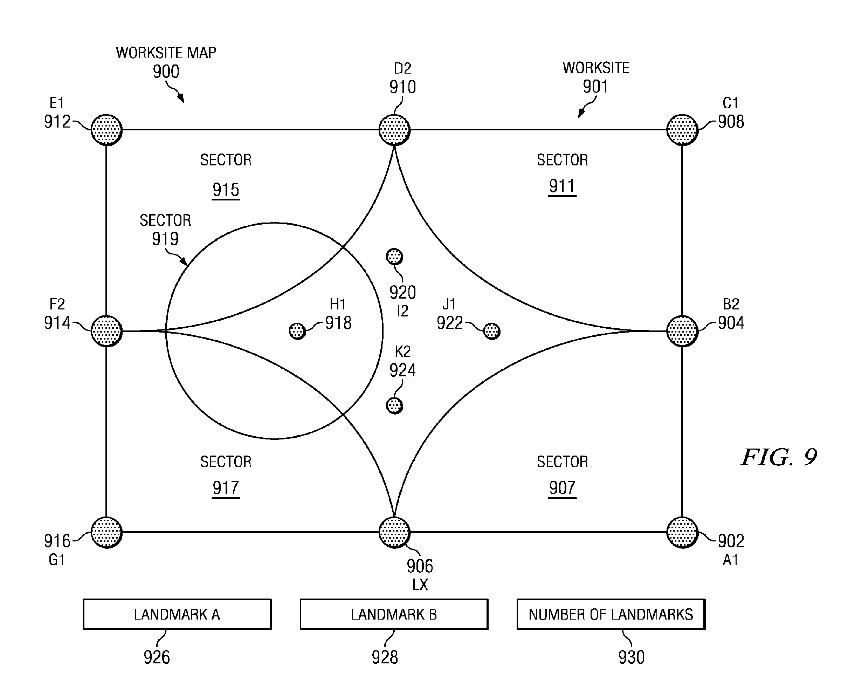

With reference now to Figure 9, a block diagram of a worksite map is depicted in accordance with an illustrative embodiment. Worksite map 900 may be an illustrative example of number of worksite maps 706 in Figure 7 and/or landmark placement map 814 in Figure 8.

Worksite map 900 may represent landmark placement by rule using sector decomposition process 332 in Figure 3, for example, to cover worksite 901. A first landmark location is identified at perimeter location A1 902. Perimeter location B2 904 and LX 906 together with perimeter location A1 902 represent sector 907. Sector 907 is an area of worksite 901 where area coverage using sector decomposition may be performed if only one landmark is present, located at perimeter location A1 902.

Perimeter location B2 904, perimeter location C1 908, and perimeter location D2 910 represent sector 911. Perimeter location D2 910, perimeter location E1 912, and perimeter location F2 914 represent sector 915. Perimeter location F2 914, perimeter location G1 916, and perimeter location LX 906 represent sector 917.

In an illustrative example, where a reduced number of landmarks including landmark A 926 and landmark B 928 are available, landmark A 926 may first be positioned at perimeter location A1 902. Sector coverage may be performed on sector 907. Landmark B 928 may then be positioned at perimeter location B2 904. Landmark A 926 is moved to perimeter location C1 908 using landmark B 928 at perimeter location B2 904 for localization. Sector coverage is then performed at sector 911.

Landmark B 928 is then moved to perimeter location D2 910. Landmark A 926 is moved to perimeter location E1 912 using landmark B 928 at perimeter location D2 910 for localization. Sector coverage is then performed at sector 915. Landmark B 928 is then moved to perimeter location F2 914. Landmark A 926 is moved to perimeter location G1 916 using landmark B 928 at perimeter location F2 914 for localization. Sector coverage is then performed at sector 917. At this point, landmark controller 802 in Figure 8 may recognize that the perimeter has been traversed and that a number of interior areas remain uncovered for worksite 901.

Landmark A 926 may be moved to interior location H1 918 and a circle sector covered, represented as sector 919. Landmark B 928 may be moved to interior location 12 920 using landmark A 926 at interior location H1 918 for localization, and a circle sector may be covered around interior location 12 920. Landmark A 926 may then be moved to interior location J1 922 using landmark B 928 at interior location 12 920 for localization, and a circle sector covered around interior location J1 922. Landmark B 928 is then moved to interior location K2 924 using landmark A 926 at location J1 922 for localization, and a circle sector covered around interior location K2 924.

In this illustrative example, worksite 901 is covered with four quadrants and four circles using two landmarks, landmark A 926 and landmark B 928.

In another illustrative example, number of landmarks 930 may be available to use at worksite 901, and an individual landmark may be placed at each location of worksite 901 to execute sector coverage without having to move any landmark during execution of the sector coverage of worksite 901.

The illustration of worksite map 900 in Figure 9 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 10, a block diagram of a worksite map is depicted in accordance with an illustrative embodiment. Worksite map 1000 may be an illustrative example of one implementation of number of worksite maps 706 in map database 702 of Figure 7 and/or worksite map 810 in Figure 8.

Worksite map 1000 is generated for worksite 1001. Worksite 1001 may be an illustrative example of worksite 128 in Figure 1. Worksite map 1000 includes landmark 1002, landmark 1004, and landmark 1006. Landmark 1002, landmark 1004, and landmark 1006 may be illustrative examples of number of landmarks 136 in Figure 1, number of portable landmarks 340 in Figure 3, and/or number of portable landmarks 806 in Figure 8. Worksite map 1000 also includes flower bed 1008 and bush 1010. In an illustrative example, flower bed 1008 and bush 1010 may be considered obstacles. Worksite map 1000 is defined by a perimeter on each side of the worksite, specifically worksite boundary 1012, worksite boundary 1014, worksite boundary 1016, and worksite boundary 1018. A path plan may be generated for worksite map 1000 using sector decomposition process 332 in Figure 3, for example.

The path plan may begin with starting point 1020. The path plan proceeds from starting point 1020 around landmark 1002 until it reaches worksite boundary 1012. The path plan may maintain a predefined distance from landmark 1002, creating an arc shaped path. The predefined distance may be, for example, without limitation, a width of the autonomous vehicle for which the path plan is being generated. Upon reaching worksite boundary 1012, the path plan follows worksite boundary 1012 away from landmark 1002 for the predefined distance. The path plan then proceeds back around landmark 1002 until it reaches worksite boundary 1014. The path plan maintains the predefined distance from each preceding arc shaped path. Upon reaching a worksite boundary, the path follows the worksite boundary the predefined distance away from the preceding arc shaped path before turning and proceeding back around the landmark, such as landmark 1002.

The path reaches an obstacle, in this example bush 1010, at point A 1022. The path is then made linear until it reaches worksite boundary 1016 at point B 1024. A next landmark is identified, in this example landmark 1004. The path proceeds around landmark 1004, in concentric rings, until it reaches point C 1026. The path is then made linear until it reaches an obstacle or a worksite boundary, in this example flower bed 1008 at point D 1028. Landmark 1006 is identified and the path proceeds around landmark 1006 until it reaches point E 1030. Point E 1030 may be an illustrative example of a point reached where the autonomous vehicle following the path is at a distance from landmark 1006 at which landmark 1006 is no longer useful as a visual landmark. The distance may be such that the required accuracy of image detection by a vision system of the autonomous vehicle is not met, for example. The autonomous vehicle may then continue on a path around another landmark, even a previously visited landmark, which is at a closer distance than landmark 1006, for example.

At point E 1030, the path again focuses on finishing a path around landmark 1002 on the opposite side of bush 1010, where it had previously left off to pursue a course around landmark 1004. At point F 1032, the path again focuses on finishing a path around landmark 1004, where it had previously left off upon encountering the perimeter where worksite boundary 1014 and worksite boundary 1016 met and proceeding linearly to point D 1028. The path continues in concentric rings around landmark 1004 until it reaches the end and there are no additional landmarks to visit and no additional areas to cover for the worksite.

An autonomous vehicle, such as number of autonomous vehicles 104 in Figure 1, may follow the path plan generated for worksite 1001 using worksite map 1000. The autonomous vehicle may start at starting point 1020 identified in worksite map 1000. This section of the path from starting point 1020 around landmark 1002 to worksite boundary 1012 may be executed using a sector decomposition behavior, such as follow arc 616 in Figure 6. When the autonomous vehicle reaches point A 1022, the linear path to point B 1024 may be executed using a sector decomposition behavior, such as point-to-point 618 in Figure 6.

The illustration of worksite map 1000 in Figure 10 is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

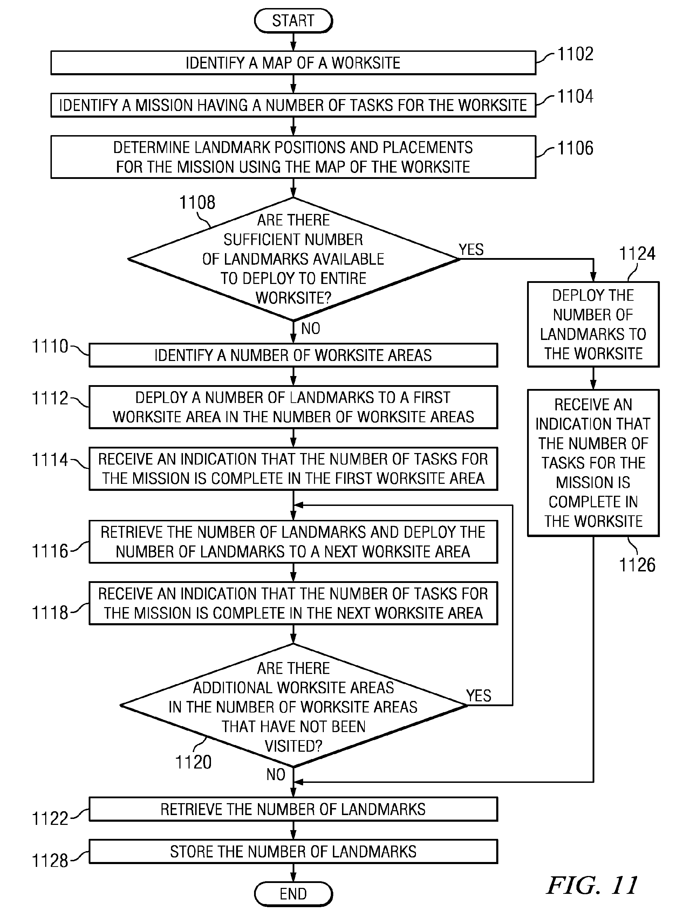

With reference now to Figure 11, a flowchart illustrating a process for landmark placement by map is depicted in accordance with an illustrative embodiment. The process in Figure 11 may be implemented by a component such as landmark deployment module 116 in Figure 1, for example.

The process begins by identifying a map of a worksite (step 1102). The map of the worksite may be retrieved from a database, for example, such as mission database 308 in Figure 3. The process identifies a mission having a number of tasks for the worksite (step 1104). In one illustrative example, the mission may be retrieved from a database, for example, such as mission database 308 in Figure 3. In another illustrative example, the mission may be received from a user, such as user 108 in Figure 1.

The process determines landmark positions and placements for the mission using the map of the worksite (step 1106). The process may use a database, such as position information 716 in Figure 7, to identify the placement and orientation, or position, of a number of landmarks within the worksite associated with the worksite map. The landmark positions and placements may depend upon the number of landmarks available, the accuracy requirements, vision system capabilities for an autonomous vehicle performing area coverage tasks within the worksite and relying on the landmarks for localization and navigation, landmark attributes, worksite features, site-specific error, and/or any other suitable consideration.

The process determines whether there are a sufficient number of landmarks available to deploy to the entire worksite (step 1108). A sufficient number is the number of landmarks needed to perform an area coverage task in the entire worksite. For example, if sector decomposition is assigned to the mission identified, at least one landmark is required to be visible from any given point within the worksite. If a determination is made that there are not a sufficient number of landmarks, the process identifies a number of worksite areas (step 1110). The process then deploys a number of landmarks to a first worksite area in the number of worksite areas (step 1112). The process receives an indication that the number of tasks for the mission is complete in the first worksite area (step 1114). The process then retrieves the number of landmarks and deploys the number of landmarks to a next worksite area (step 1116). The process receives an indication that the number of tasks for the mission is complete in the next worksite area (step 1118).

The process then determines whether there are additional worksite areas in the number of worksite areas that have not been visited (step 1120). If a determination is made that there are additional worksite areas that have not been visited, the process returns to step 1116. If a determination is made that there are no additional worksite areas that have not been visited, the process retrieves the number of landmarks (step 1122).

If a determination is made that there are a sufficient number of landmarks to deploy to the entire worksite in step 1108, the process deploys the number of landmarks to the worksite (step 1124). The process then receives an indication that the number of tasks for the mission is complete in the worksite (step 1126), and retrieves the number of landmarks (step 1122). The process then stores the number of landmarks (step 1124), with the process terminating thereafter.

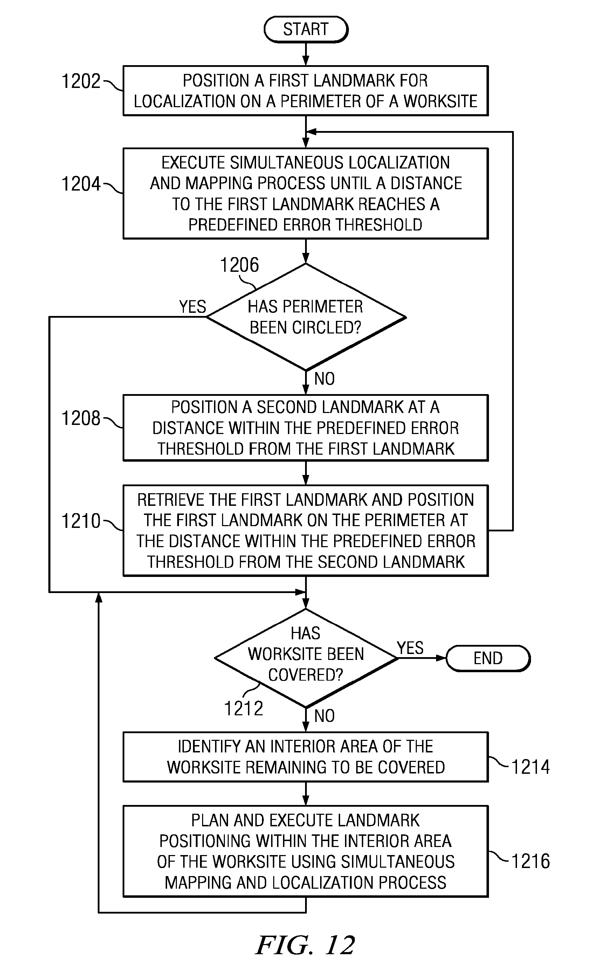

With reference now to Figure 12, a flowchart illustrating a process for landmark placement by rule is depicted in accordance with an illustrative embodiment. The process in Figure 12 may be implemented by a component such as landmark deployment module 116 in Figure 1, for example.

The process begins by positioning a first landmark for localization on a perimeter of a worksite (step 1202). The process executes a simultaneous localization and mapping process until a distance to the first landmark reaches a predefined error threshold (step 1204). The process then determines if the perimeter has been circled (step 1206).

If a determination is made that the perimeter has not been circled, the process positions a second landmark at a distance within the predefined error threshold from the first landmark (step 1208). The process retrieves the first landmark and positions the first landmark on the perimeter at the distance within the predefined error threshold from the second landmark (step 1210). The process then returns to step 1204.

If a determination is made that the perimeter has been circled, the process proceeds to step 1212. The process determines whether the worksite has been covered (step 1212). If a determination is made that the worksite has not been covered, the process identifies an interior area of the worksite remaining to be covered (step 1214). The process plans and executes landmark positioning within the interior area of the worksite using the simultaneous mapping and localization process (step 1216), and returns to step 1212. If a determination is made that the worksite has been covered in step 1212, the process terminates thereafter.

With reference now to Figure 13, a flowchart illustrating a process for executing a path plan is depicted in accordance with an illustrative embodiment. The process in Figure 13 may be implemented by a component such as processor unit 302 of navigation system 300, for example.

The process begins by receiving a worksite map for a worksite having a number of landmarks (step 1302). The number of landmarks may be positioned at the worksite so that at least one landmark is visible from any location of the worksite. The number of landmarks may be positioned at the worksite by, for example, without limitation, a human, a robot, autonomously, and/or any other suitable method of landmark placement.

In an illustrative example, the worksite map may be an initial map without a path plan, such as worksite map 708 in Figure 7. The worksite map may be retrieved from a map database, such as map database 702 in Figure 7, or received from a user or back office, for example. In one illustrative example, the worksite map may be an aerial image of the worksite in which obstacles, or boundaries, have been indicated by a user familiar with the worksite. The worksite map may also have marked locations of landmarks for the worksite and landmark attributes, such as diameter and color, marked by the user in this illustrative example.

The process generates an area coverage grid map having a number of area coverage grid elements for the worksite using the worksite map (step 1304). The area coverage grid elements may be a number of sections of the area coverage grid map, for example. In one illustrative example, an area coverage grid map is generated from the worksite map, where the area coverage grid map represents the same region as the worksite map and is further divided into a grid. The size of each area coverage grid element may be predefined and/or selected by a user. For example, each area coverage grid element may be between one tenth and twice the size of the autonomous vehicle slated to perform the area coverage task in the worksite.

The process then generates a path plan for the worksite using the worksite map and the area coverage grid map (step 1306). The process marks the number of landmarks on the worksite map as 'unvisited' and initializes the number of area coverage grid elements as 'uncovered' (step 1308). In one illustrative example, the worksite map is initialized by setting all designated landmarks as unvisited and the area coverage grid map is initialized by setting all area coverage grid elements to zero. As the process proceeds, a landmark may be marked 'visited' when all areas within a calculated distance of the landmark have been covered, for example. The calculated distance may be based on landmark size, vision system parameters, and/or a maximum acceptable distance error between an autonomous vehicle and the landmark, for example.

In one illustrative example, an area is considered covered if a percentage of grid elements in the area have a coverage value greater than a given threshold value. The coverage value is the value of an area coverage grid element. Starting from zero, the value is incremented by an amount each time the autonomous vehicle, or autonomous vehicle effecter, is shown to be positioned at the area coverage grid element until a value of at least one is achieved.

In one illustrative example, only zero or one values occur for coverage values, where zero indicates that the area coverage grid element is not covered and one indicates that the area coverage grid element is covered. In another illustrative example, error in autonomous vehicle localization may be considered in incrementing the area coverage grid elements. In this illustrative example, rather than setting the area coverage grid element at the current calculated autonomous vehicle position to one, a probability between zero and one is assigned to being at that location and a lower probability to adjacent area coverage grid elements. The current and adjacent area coverage grid elements are incremented by the probability of occupancy. The sum of this current probability of occupancies adds up to one, in this illustrative example.

Next, the process performs an area coverage task at the worksite with an autonomous vehicle using the path plan (step 1310). The process identifies a landmark marked as unvisited on the worksite map (step 1312). The process sends a message to a vehicle control process to move the autonomous vehicle to the landmark marked as unvisited (step 1314).

The process executes an area coverage behavior on a path around the landmark with the autonomous vehicle(step 1316). The area coverage grid map associated with the worksite, such as area coverage grid map 710 in Figure 7, is updated based on each calculated current position of the autonomous vehicle used to execute the area coverage behavior. The process then determines whether an obstacle is detected or a full circle has been traversed by the autonomous vehicle (step 1318). If a determination is made that an obstacle has not been detected or a full circle has not been traversed, the process returns to step 1316.

If a determination is made that an obstacle has been detected or a full circle has been traversed, the process determines whether the autonomous vehicle can move a given distance away from the landmark (step 1320). An autonomous vehicle may not be able to move the given distance away from the landmark due to an obstacle or because the calculated distance error exceeds a threshold value, for example. If a determination is made that the autonomous vehicle can move the given distance away from the landmark, the process sends a message to the vehicle control process to move the autonomous vehicle the given distance away from the landmark and execute the area coverage behavior in an opposite direction (step 1322), with the process then returning to step 1318. If a determination is made that the autonomous vehicle can not move the given distance away from the landmark, the process marks the landmark as 'visited' on the worksite map (step 1324). The process then determines whether there are any remaining landmarks marked as `unvisited' on the worksite map (step 1326). If a determination is made that there are remaining landmarks marked as 'unvisited' on the worksite map, the process identifies a next landmark marked as 'unvisited' on the worksite map (step 1328) and returns to step 1314.

If a determination is made that there are no remaining landmarks marked as 'unvisited' on the worksite map, the process then determines whether there are any remaining area coverage grid elements marked as 'uncovered' (step 1330). If a determination is made that there are remaining area coverage grid elements marked as 'uncovered', the process sends a message to the vehicle control process to proceed along the path plan to a visited landmark associated with an area coverage grid element marked as 'uncovered' (step 1332), and then returns to step 1316. If a determination is made that there are no remaining area coverage grid elements marked as 'uncovered', the process terminates thereafter.

With reference now to Figure 14, a flowchart illustrating a process for executing a path plan using simultaneous localization and mapping is depicted in accordance with an illustrative embodiment. The process in Figure 14 may be implemented by a component such as simultaneous localization and mapping process 334 in Figure 3, for example.

The process begins by receiving a number of landmark attributes and obstacle information for a worksite (step 1402). The landmark attributes may be, for example, without limitation, landmark descriptions, images, characteristics, and/or any other suitable attribute. In one illustrative example, the number of landmark attributes may identify landmarks as cylinders with a given diameter and colors red, white, and blue.

The process generates an area coverage grid map having a number of grid elements (step 1404). The process then acquires an image of the worksite (step 1406). The image may be acquired using a vision system, such as vision system 320 in Figure 3 using number of cameras 322, for example. The process determines whether a landmark is identified in the image (step 1408).

If a determination is made that that a landmark is not identified in the image, the process searches for a landmark in the worksite area using a number of cameras rotating at an amount which is the product of the field of view in degrees multiplied by a value between zero and one to provide image overlap in additional images acquired (step 1410). The process then determines whether a landmark is identified in the additional images acquired (step 1412). If a determination is made that a landmark is not identified in the additional images, the process determines whether the number of cameras have rotated 360 degrees (step 1414). If a determination is made that the number of cameras have rotated 360 degrees, the process adds error handling (step 1416), and terminates thereafter. Error handling refers to the landmark rule, which is that at least one landmark is always in view from all workable portions of a worksite. If at least one landmark cannot be found, the rule is broken, and the process terminates.

If a determination is made that the number of cameras have not rotated 360 degrees, the process returns to step 1410. If a determination is made that a landmark is identified in the image in step 1408 or if a determination is made that a landmark is identified in the additional images in step 1412, the process then determines if the landmark identified has been visited (step 1418). If a landmark has been visited, the area coverage grid map will be marked with a 'visited' landmark previously identified.

If a determination is made that the landmark identified has been visited, the process determines whether all reachable grid map elements have been covered (step 1420). When a grid map element is covered, it will be marked as 'covered' on the area coverage grid map. If there are areas of the area coverage grid map marked as 'uncovered' then there are remaining reachable grid map elements to cover. If a determination is made that all grid map elements have been covered, the process terminates thereafter.

If a determination is made that all grid map elements have not been covered, the process acquires a next image for a next worksite area (step 1422) and returns to step 1408.

If a determination is made that the landmark identified has not been visited, the process calculates a path plan to the landmark identified (step 1424). The process then marks the current position of an autonomous vehicle and estimated landmark position on the area coverage grid map of the worksite (step 1426). The process executes the path plan, marking the area coverage grid elements traversed as 'covered' (step 1428), and proceeds to step 1420.

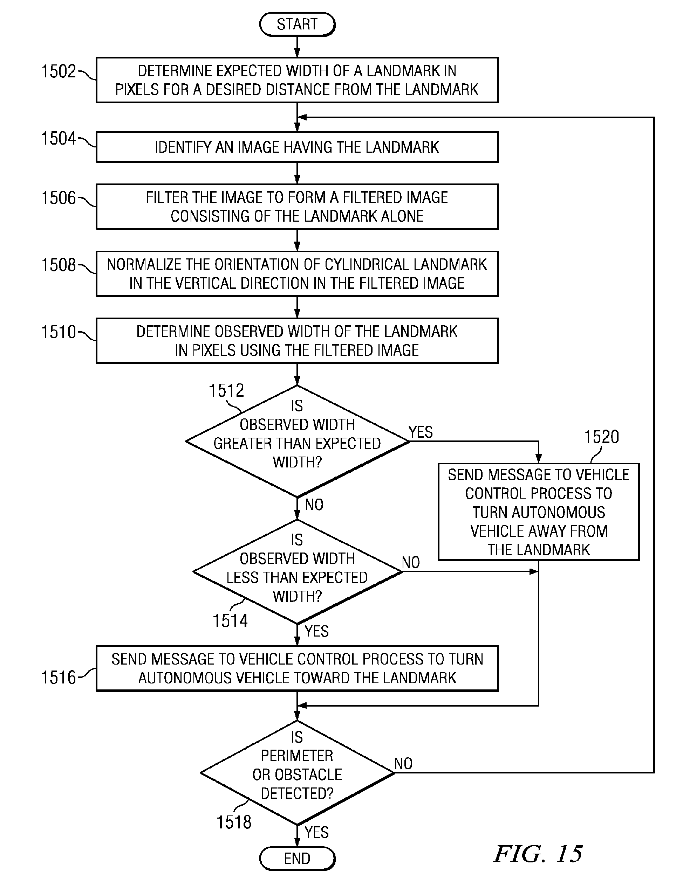

With reference now to Figure 15, a flowchart illustrating a process for executing an area coverage path plan using sector decomposition is depicted in accordance with an illustrative embodiment. The process in Figure 15 may be implemented by a component such as navigation system 300 in Figure 3, for example.

The process begins by determining an expected width of a landmark in pixels for a desired distance from the landmark (step 1502). The expected width may be the width of a landmark expected to be identified in an image of the landmark at a given distance from the landmark. The expected width may be geometrically calculated based on the camera image resolution for the number of cameras used to capture the image, the known width of the landmark identified in a landmark database, the target distance of the autonomous vehicle from the landmark, and the field of view for the number of cameras used to capture the image, for example. The process identifies an image having the landmark (step 1504). The image may be identified using a vision system, such as vision system 320 in Figure 3, for example. The process filters the image to form a filtered image consisting of the landmark alone (step 1506). The image may be filtered to reduce pixel noise, for example. In one illustrative example, filtering may be accomplished optically using a polarized wavelength selective filter on number of cameras 322 of vision system 320 in Figure 3, for example. In another illustrative example, wavelength selective filtering may be accomplished using software implemented in vision system 320. In yet another illustrative example, vision system 320 may filter number of images 324 in Figure 3 by application of a median filter to remove pixel-level noise. The median filter may be a software process used by vision system 320 in Figure 3 in this example.

The process optionally normalizes the orientation of cylindrical landmarks in the vertical direction in the filtered image (step 1508). The normalization of the image may be performed using vision system 320 and/or processor unit 302 of Figure 3, for example. In an illustrative example, if a landmark is a cylinder, the image may be processed to identify the axis of the cylinder. The width is then calculated orthogonal to the axis identified, in this example.

The process determines the observed width of the landmark in pixels using the filtered image (step 1510). In an illustrative example, the observed width of the landmark may be calculated using a single cross section of a normalized landmark from step 1508. In another illustrative example, the observed width of the landmark may be calculated by taking an average of a number of cross sections of the landmark identified in the image. In an illustrative example where glare off a landmark is detected, the number of cross section widths which are significantly lower than the majority or plurality of cross section widths may be dropped from the width calculation.

The process then determines whether the observed width is greater than the expected width (step 1512). If a determination is made that the observed width is not greater than the expected width, the process determines whether the observed width is less than the expected width (step 1514). If a determination is made that the observed width is less than the expected width, the process sends a message to a vehicle control process to turn an autonomous vehicle toward the landmark (step 1516). If a determination is made that the observed width is not less than the expected width, the process determines whether a perimeter or obstacle is detected (step 1518).

If a determination is made that the observed width is greater than the expected width, the process sends a message to the vehicle control process to turn the autonomous vehicle away from the landmark (step 1520) and proceeds to step 1518.

If a determination is made that a perimeter or obstacle is not detected, the process returns to step 1504. If a determination is made that a perimeter or obstacle is detected, the process terminates thereafter.

With reference now to Figure 16, a flowchart illustrating a process for generating an area coverage path plan using sector decomposition is depicted in accordance with an illustrative embodiment. The process in Figure 16 may be implemented by a component such as navigation system 300 in Figure 3, for example.

The process begins by identifying a starting point on a worksite map having a number of landmarks (step 1602). The process identifies a first landmark in the number of landmarks (step 1604). The process begins a path from the starting point around the first landmark, maintaining a predefined distance from the first landmark to form a first arc (step 1606). The process determines whether a worksite boundary is detected (step 1608).

If a determination is made that a worksite boundary is detected, the process moves the path a predefined width away from the first arc along the worksite boundary (step 1610). The process then continues the path around the first landmark to form a next arc (step 1612), before returning to step 1608.

If a determination is made that a worksite boundary is not detected, the process determines whether an obstacle is detected (step 1614). If a determination is made that no obstacle is detected, the process returns to step 1606. If a determination is made that an obstacle is detected, the process makes the path linear to a vicinity of a next landmark (step 1616). The process continues the path around the next landmark to form a number of arcs (step 1618). The process iteratively repeats until the path covers the worksite map (step 1620). The process then generates a path plan (step 1622), with the process terminating thereafter.

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

The different advantageous embodiments can take the form of an entirely hardware embodiment, an entirely software embodiment, or an embodiment containing both hardware and software elements. Some embodiments are implemented in software, which includes but is not limited to forms, such as, for example, firmware, resident software, and microcode.

Furthermore, the different embodiments can take the form of a computer program product accessible from a computer-usable or computer-readable medium providing program code for use by or in connection with a computer or any device or system that executes instructions. For the purposes of this disclosure, a computer-usable or computer readable medium can generally be any tangible apparatus that can contain, store, communicate, propagate, or transport the program for use by or in connection with the instruction execution system, apparatus, or device.

The computer usable or computer readable medium can be, for example, without limitation, an electronic, magnetic, optical, electromagnetic, infrared, or semiconductor system, or a propagation medium. Non limiting examples of a computer-readable medium include a semiconductor or solid state memory, magnetic tape, a removable computer diskette, a random access memory (RAM), a read-only memory (ROM), a rigid magnetic disk, and an optical disk. Optical disks may include compact disk-read only memory (CD-ROM), compact disk-read/write (CD-R/W) and DVD.

Further, a computer-usable or computer-readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples of modems and network adapters are just a few of the currently available types of communications adapters.

## Claims

1. A method for placing landmarks, the method comprising:
identifying a map of a worksite;
identifying a mission having a number of tasks for the worksite;
determining landmark positions and placements for the mission using the map of the worksite; and
deploying a number of landmarks using the landmark positions and placements determined for the mission.

2. The method of claim 1, further comprising:
determining whether there are a sufficient number of landmarks available to deploy to the entire worksite, wherein the sufficient number is the number of landmarks needed to perform an area coverage task in the entire worksite; and
responsive to a determination that there are a sufficient number of landmarks available, deploying the number of landmarks to the worksite.

3. The method of claim 2, further comprising:
receiving an indication that the number of tasks for the mission is complete in the worksite; and
retrieving the number of landmarks from the worksite.

4. The method of claim 2, further comprising:
responsive to a determination that a sufficient number of landmarks is not available, identifying a number of worksite areas;
deploying a number of landmarks to a first worksite area in the number of worksite areas;
receiving an indication that the number of tasks for the mission is complete in the first worksite area; and
retrieving the number of landmarks and deploying the number of landmarks to a next worksite area.

5. The method of claim 4, further comprising:
receiving an indication that the number of tasks for the mission is complete in the next worksite area;
determining whether there are additional worksite areas in the number of worksite areas that have not been visited;
responsive to a determination that there are additional worksite areas that have not been visited, retrieving the number of landmarks and deploying the number of landmarks to the next worksite area.

6. The method of claim 5, further comprising:
responsive to a determination that there are no additional worksite areas that have not been visited, retrieving the number of landmarks; and
storing the number of landmarks.

7. A method for landmark placement by rule, the method comprising:
positioning a first landmark for localization on a perimeter of a worksite;
executing a simultaneous localization and mapping process until a distance to the first landmark reaches a predefined threshold; and
determining whether the perimeter has been circled.

8. The method of claim 7, further comprising:
responsive to a determination that the perimeter has not been circled, positioning a second landmark at a distance within the predefined error threshold from the first landmark;
retrieving the first landmark and positioning the first landmark on the perimeter at the distance within the predefined error threshold from the second landmark; and
executing a simultaneous localization and mapping process until a distance to the first landmark reaches a predefined threshold.

9. The method of claim 7, further comprising:
responsive to a determination that the perimeter has been circled, determining whether the worksite has been covered.

10. The method of claim 9, further comprising:
responsive to a determination that the worksite has not been covered, identifying an interior area of the worksite remaining to be covered; and
planning and executing landmark positioning within the interior area of the worksite using the simultaneous mapping and localization process.

11. An apparatus comprising:
a landmark controller having a landmark position and placement process;
a landmark deployment system having a number of manipulative components; and
a number of portable landmarks configured to be deployed to a number of locations within a worksite.

12. The apparatus of claim 11, wherein the landmark position and placement process generates a landmark placement map and landmark positioning instructions.

13. The apparatus of claim 11, wherein the number of portable landmarks further comprise at least one of a mobility system and a number of attachment components.
